# EUROPEAN PATENT SPECIFICATION

(11) **EP 1 756 257 B1**
(45) Date of publication and mention of the grant of the patent: **14.05.2014**
(21) Application number: 05750214.8
(22) Date of filing: 09.06.2005
(51) Int. Cl.: C11D 3/39, C11D 3/48, B65B 9/04, C11D 17/04

(54) **PROCESS FOR PREPARING WATER-SOLUBLE ARTICLES AND SUCH ARTICLES**
VERFAHREN ZUR HERSTELLUNG VON WASSERLÖSLICHEN ARTIKELN UND SOLCHE ARTIKEL
PROCEDE DESTINE A PREPARER DES ARTICLES SOLUBLES DANS L'EAU ET ARTICLES

(30) Priority: 11.06.2004 GB 0413053
(43) Date of publication of application: 28.02.2007
(60) Divisional application: 14163223.2
(73) Proprietor: Reckitt Benckiser N.V., 2132 WT Hoofddorp (NL)
(72) Inventor: AYATS, Francesc, Reckitt Benckiser Spain, E-08400 Barcelona (ES); SALVADOR, Jordi, Reckitt Benckiser Spain, E-08400 Barcelona (ES); MOREUX, Frederic, Reckitt Benckiser Produktions GmbH, 68526 Ladenburg (DE)
(74) Representative: Hodgetts, Catherine Dawn
(86) International application number: PCT/GB2005/002264
(87) International publication number: WO 2005/121302

(56) References cited:
- EP-A- 1 375 637
- DE-U1- 20 022 487
- GB-A- 2 367 828
- US-A1- 2003 228 433
- US-A1- 2004 118 711

## Description

The present invention relates to a process for producing a water-soluble article comprising a water-soluble, primary (or "first") thermoformed component and a water-soluble, secondary (or "second") component arranged therein. It also relates to an article obtainable by such a process. Water-soluble articles are known e.g. in EP 1375637.

Thermoforming is a well-known technique for preparing articles from a polymer. It generally comprises heating a polymeric composition, which can be in the form of, for example, a film, to above its softening temperature and thermally deforming the composition in a male or female mould.

It is also known to package chemical compositions, particularly those which may be of a hazardous or irritant nature, in films. If such compositions are held within water-soluble films forming a container around the compositions, the containers can simply be added to water in order to dissolve or disperse the composition into the water.

WO 92/17382 discloses a package containing an agrochemical comprising a first sheet of non-planar water-soluble or water-dispersible material and a second sheet of water-soluble or water-dispersible material superposed on the first sheet and sealed to it.

However, this package can only contain a single composition which is compatible with the film. It cannot be used for two compositions which are incompatible with each other or for compositions which are incompatible with the water-soluble or water-dispersible material. For example, WO 92/17382 states that when the package contains the liquid, the liquid must be an organic liquid which contains less than 2 to 3% of water to ensure that it does not attack the film forming the package and cause leakage.

The present invention provides a process according to claim 1 for preparing a water-soluble article.

The present invention also provides a water-soluble article according to claim 16.

The contents of the primary component are solid, and granulate / particulate.

The contents of the primary component are tightly packed so that the secondary component is fixed in position in the primary component. This fixed/reliable positioning has several advantages.

Firstly it ensures that in the sealing stage of the primary component, no detrimental interaction occurs with the secondary component. Thus any potentially detrimental physical issues, such as the disturbance/rupture of the secondary component are obviated, as the positioning of the secondary component away from the area of the sealing portion is ensured. This is particularly important when the secondary component contains components which would (if not kept separate) detrimentally react with the contents of the primary component. It also ensures that sealing of the primary component is not detrimentally affected by the presence of the secondary component.

Additionally the shape of the final article is predictable: in certain uses, such as in an automatic dishwasher, there is a requirement that the article has a certain shape so that it may be accommodated in the dosing chamber of the dishwasher. With the reliable location of the secondary component within the article produced in accordance with the present invention a predicted form is achieved. Further the predictable form ensures that the article can be packed (e.g. in boxes/pouches for sale to a consumer) with greatly reduced interaction between articles since each article has the same uniform shape.

Furthermore where the primary component is transparent and where the secondary component has a contrasting appearance to the contents of the primary component the overall aesthetics of the article can be guaranteed. This is particularly important where companies have recognised / associated shapes or patterns: it ensures the correct appearance of the article such that the consumer correctly connects the article with the company.

The present invention provides a convenient process for preparing an article comprising a thermoformed primary component, which has a secondary component arranged therein. While it may well be possible to prepare an article by preparing the initial primary component by thermoforming and then attaching the secondary component thereto using, for example, an adhesive, the process of the present invention provides a process which can be carried out in a single step, thus eliminating the need to use separate machines.

The primary component, prior to being placed in or over the thermoforming mould, may be of any shape or form. The primary component may, for example, be in the form of a rigid sheet or a flexible film. The finally formed water-soluble article may be, for example, in the form of a strip of a sheet or film. Individual compositions may then be removed from the sheet or film for individual use. Perforations in the sheet or film may be used to assist separation.

Ideally the primary component is a film which is thermoformed in the mould, thus becoming the primary thermoformed component. Preferably the film of the primary component is formed into a pocket surrounded by a sealing portion. The pocket may be closed, for example by placing a film on top of the filled pocket and across the sealing portion and sealing the films together at the sealing portion.

Most desirably in the present invention the primary component is a container. The secondary component is arranged on the inside of the container.

The film may be a single film, or a laminated film as disclosed in GB-A-2,244,258. While a single film may have pinholes, the two or more layers in a laminate are unlikely to have pinholes which coincide. The film is water-soluble (which term is taken to include water-dispersible).

The term "water-soluble" when used herein means that when used in a washing machine, such as a fabric or dish washing machine, the water-soluble aspects of the article are substantially (greater than 70%, ideally greater than 85%) dissolved or dispersed into the water. This can be tested by placing the article in 10 litres of agitated water at 45°C for 40 minutes and measuring any un-dissolved or non-disintegrated pieces of the parts of the article; which are water-soluble, that are left.

The film may be produced by any process, for example by extrusion and blowing or by casting. The film may be unoriented, monoaxially oriented or biaxially oriented. If the layers in the film are oriented, they usually have the same orientation, although their planes of orientation may be different if desired.

The layers in a laminate may be the same or different. Thus they may each comprise the same polymer or a different polymer. If it is desired to have a water-soluble laminated film, each of the layers should be water-soluble.

Examples of water-soluble polymers which may be used in a single layer film or in one or more layers of a laminate are poly(vinyl alcohol) (PVOH) and cellulose derivatives such as hydroxypropyl methyl cellulose (HPMC). An example of a preferred PVOH is ethoxylated PVOH. The PVOH may be partially or fully alcoholised or hydrolysed. For example it may be from 40 to 100%, preferably from 70 to 92%, more preferably about 88% or about 92%, alcoholised or hydrolysed. The degree of hydrolysis is known to influence the temperature at which the PVOH starts to dissolve in water. 88% hydrolysis corresponds to a film soluble in cold (ie room temperature) water, whereas 92% hydrolysis corresponds to a film soluble in warm water.

The thickness of the film used to produce the pocket is preferably 40 to 300µm, more preferably 70 to 200µm, especially 80 to 160µm, more especially 90 to 150µm and most especially 90 to 120µm.

In a thermoforming process the primary component, preferably a film, may be drawn down or blown down into a mould. Thus, for example, the primary component is heated to the thermoforming temperature using a thermoforming heater plate assembly, and then drawn down under vacuum or blown down under pressure into the mould. Plug-assisted thermoforming and pre-stretching the film, for example by blowing the film away from the mould before thermoforming, may, if desired, be used. One skilled in the art can choose an appropriate temperature, pressure or vacuum and dwell time to achieve an appropriate pocket. The amount of vacuum or pressure and the thermoforming temperature used depend on the thickness and porosity of the film and on the polymer or mixture of polymers being used. The use of vacuum has been found to aid the drawing of the film into the recess of the thermoforming cavity. Thermoforming of PVOH films is known and described in, for example, WO 00/55045.

A suitable forming temperature for PVOH or ethoxylated PVOH is, for example, from 90 to 130°C, especially 90 to 120°C. A suitable forming pressure is, for example, 69 to 138kPa (10 to 20 p.s.i.), especially 83 to 117kPa (12 to 17 p.s.i.). A suitable forming vacuum is 0 to 4kPa (0 to 40 mbar), especially 0 to 2kPa (0 to 20mbar). A suitable dwell time is, for example, 0.4 to 2.5 seconds, especially 2 to 2.5 seconds.

While desirably conditions are chosen within the above ranges, it is possible to use one or more of these parameters outside the above ranges, although it may be necessary to compensate by changing the values of the other two parameters.

Where a pocket is formed from the primary component the secondary component may be added into the recess. The addition is preferably performed in a mechanised technique, e.g. by using a robot arm.

The secondary component is most preferably a pre-formed shape. Generally the shape is such that the secondary component is suitably received in the recess of the thermoforming cavity. Preferred examples of suitable shapes include spheres, ovoids and other 3-dimensional shapes having a curved face (with the curved face preferably being disposed adjacent to the inside of the recess). Conversely the recess is preferably curved and most preferably is complimentery to the secondary component.

The secondary component may be any water-soluble components. The term "water-soluble" again includes water-dispersible.

Thus, for example, the secondary component may be in the form of a solid, such as a compressed solid, for example in the form of a ball or pill. It may also itself be a container containing a secondary composition. For example it may comprise a polymeric film containing a secondary composition such as a solid, a gel or a liquid. Such a container may be previously prepared by a thermoforming technique such as that discussed above. It may also be prepared by other means, for example by vertical form fill sealing, injection moulding or blow moulding.

The pocket is formed from the primary component and filled with a desired composition before sealing. The pocket is generally completely filled. The composition may be a particulate solid or a granulated solid. The composition may have more than one phase. For example it may comprise a plurality of layers of differing (either aesthetically or chemically) compositions.

After the pocket has been filled it is closed, for example by placing a film on top of the filled pocket and across the sealing portion, and sealing the films together at the sealing portion. This film may be a single-layered film but is desirably laminated to reduce the possibility of pinholes allowing leakage through the film. The film may be the same or different as the film forming the pocket. Examples of suitable films are those given for the film forming the pocket.

Desirably the covering film has a thickness which is less than that of the film used for forming a pocket because it would not generally be stretched so localised thinning of the sheet will not occur. It is also desirable to have a thickness which is less than that of the film used to form a pocket to ensure a sufficient heat transfer through the film to soften the pocket film if heat sealing is used.

The thickness of the covering film is generally from 20 to 160µm, preferably from 40 to µm, such as 40 to 80µm or 50 to 60µm.

The films may be sealed together by any suitable means, for example by means of an adhesive or by heat sealing. Other methods of sealing include infra-red, radio frequency, ultrasonic, laser, solvent (such as water), vibration and spin welding. An adhesive such as an aqueous solution of PVOH may also be used. The seal desirably is water-soluble if the containers are water-soluble. The presence of a coating on the sealing portion of the film could hinder or prevent sealing and could cause a reduction in seal strength. Therefore, in the present invention, the sealing portion is preferably left uncoated by the coating composition.

If heat sealing is used, a suitable sealing temperature is, for example, 120 to 195°C, for example 140 to 150°C. A suitable sealing pressure is, for example, from 250 to 600kPa. Examples of sealing pressures are 276 to 552kPa (40 to 80 p.s.i.), especially 345 to 483kPa (50 to 70 p.s.i.) or 400 to 800kPa (4 to 8 bar), especially 500 to 700kPa (5 to 7 bar) depending on the heat sealing machine used. Suitable sealing dwell times are 0.4 to 2.5 seconds.

One skilled in the art can use an appropriate temperature, pressure and dwell time to achieve a seal of the desired integrity. While desirably conditions are chosen within the above ranges, it is possible to use one or more of these parameters outside the above ranges, although it might be necessary to compensate by changing the values of the other two parameters.

If the primary composition or secondary composition is incompatible with the films enclosing them, steps have to be taken to improve the compatibility. For example, if the films are water-soluble, the amount of free water in the compositions may be reduced. In particular, an electrolyte or gelling agent may be added. Alternatively a coating may be applied on the inside of the films, for example as disclosed in WO 00/64667 or by coating the inside of the pockets after they have been thermoformed but before they have been filled.

The primary composition and the composition constituting the secondary component may be the same or different. If they are different they may, nevertheless, have one or more individual components in common. The present invention is especially advantageous when the primary composition and the secondary composition are incompatible with each other since they are separated. It is also advantageous if one of the compositions is incompatible with the components contacting the other composition. For example, the secondary composition may be a composition which is incompatible with the film forming the container containing the primary composition when the secondary composition is itself held within a film. Similarly the primary composition may be a composition which is incompatible with the secondary component or the film containing the secondary composition.

In a thermoforming process air must be evacuated from under-neath the primary component as it is being thermoformed. In particular the mould may, for example, be roughened to assist good air evacuation.

Preferably the secondary component should not be placed in a position where a substantial thinning of the primary component can occur if it is in the form of a film. Desirably, therefore, air is withdrawn from the sides and corners of the mould as well as, preferably, the bottom of the mould.

The mould contains a recess which is dimensioned so as to accept the secondary component. This is especially advantageous when the secondary component is in the form of a ball since it can simply roll into the recess. The recess may be in any part of the mould, but is desirably near the bottom of the mould, for example on the bottom surface of the mould. It may be at the centre of the bottom surface, or may be off-set to one side. Preferably the depth of the recess is adjustable to accommodate secondary components of varying size. Generally the recess is based on a portion of a sphere / ovoid. The recess is typically about 4mm deep (e.g. 4.5mm) and about 13mm wide.

During the thermoforming process the primary component, which is usually a polymer, has an elevated temperature. By an appropriate choice of thermoforming temperature and of the secondary component, the secondary component will stick to the primary component. This is especially the case when, for example, the secondary component itself comprises a polymeric film which will be heated to a certain extent by the elevated temperatures within the thermoforming machine or by the contacting of the heated primary component. The mould may also be formed such that the cooling pipes generally used in thermoforming moulds do not cool the area directly under the secondary component. Alternatively the mould may be formed such that heating, e.g. RF welding, heats the area under the secondary component to aid adherence to the primary component.

Alternatively the secondary component may have an adhesive applied thereto before or after it is placed in the cavity of the thermoforming mould. A suitable adhesive may, for example, be a polymer which is heated in the thermoforming mould, or a component such as water which can act as an adhesive when it contacts the primary component, especially since the primary component is water-soluble. Preferably the primary and secondary components are formed from or are coated with the same water-soluble polymer, this aids adhesion, especially in the presence of water. The adhesive may, for example, be a heat activated adhesive or coating. The secondary component may also be held on the primary component by mechanical adhesion by ensuring that the primary component flows around and at least partially encloses the secondary component.

The primary and secondary compositions may independently be any compositions which are intended to be released in an aqueous environment. Thus, for example, either or both compositions may be agrochemical compositions such as a plant protection agent, for instance a pesticide such as an insecticide, fungicide, herbicide, acaricide, or nematocide, a plant growth regulator or a plant nutrient. Such compositions are generally packaged in total amounts of from 0.1g to 7kg, preferably 1 to 5kg, when in solid form. When in liquid or gelled form, such compositions are generally packaged in total amounts of from 1ml to 10 litres, preferably 0.1 to 6 litres, especially from 0.5 to 1.5 litres.

The primary and secondary compositions may also independently be fabric care, surface care or dishwashing compositions. Thus, for example, it may be a dishwashing, water-softening, laundry or detergent composition, or a rinse aid. Such compositions may be suitable for use in a domestic washing machine. The primary and secondary compositions may also independently be a disinfectant, antibacterial or antiseptic composition, or a refill composition for a trigger-type spray. Such compositions are generally packaged in total amounts of from 5 to 100g, especially from 15 to 40g. For example, a dishwashing composition may weigh from 15 to 30g, a water-softening composition may weigh from 15 to 40g.

The primary composition and the secondary composition may be appropriately chosen depending on the desired use of the article.

If the article is for use in laundry washing, the primary composition may comprise, for example, a detergent, and the secondary composition may comprise a bleach, stain remover, water-softener, enzyme or fabric conditioner. The article may be adapted to release the compositions at different times during the dish washing cycle. For example, a bleach or fabric conditioner is generally released at the end of a wash, and a water-softener is generally released at the start of a wash. An enzyme may be released at the start or the end of a wash.

If the article is for use as a fabric conditioner, the primary composition may comprise a fabric conditioner and the secondary component may comprise an enzyme which is released before or after the fabric conditioner in a rinse cycle.

If the article is for use in dish washing the primary composition may comprise a detergent and the secondary composition may comprise a water-softener, enzyme, rinse aid, bleach or bleach activator. The article may be adapted to release the compositions at different times during the wash. For example, a rinse aid, bleach or bleach activator is preferably released at the end of a wash, and a water-softener or enzyme is generally released at the start of a wash.

The remaining ingredients of the primary and secondary compositions depend on the use of the compositions. Thus, for example, the compositions may independently contain surface active agents such as an anionic, nonionic, cationic, amphoteric or zwitterionic surface active agents or mixtures thereof.

Examples of anionic surfactants are straight-chained or branched alkyl sulfates and alkyl polyalkoxylated sulfates, also known as alkyl ether sulfates. Such surfactants may be produced by the sulfation of higher C₈-C₂₀ fatty alcohols.

Examples of primary alkyl sulfate surfactants are those of formula:

ROSO₃⁻M⁺

wherein R is a linear C₈-C₂₀ hydrocarbyl group and M is a water-solubilising cation. Preferably R is C₁₀-C₁₆ alkyl, for example C₁₂-C₁₄, and M is alkali metal such as lithium, sodium or potassium.

Examples of secondary alkyl sulfate surfactants are those which have the sulfate moiety on a "backbone" of the molecule, for example those of formula:

CH₃(CH₂)ₙ(CHOSO₃⁻M⁺) (CH₂)ₘCH₃

wherein m and n are independently 2 or more, the sum of m+n typically being 6 to 20, for example 9 to 15, and M is a water-solubilising cation such as lithium, sodium or potassium.

Especially preferred secondary alkyl sulfates are the (2,3) alkyl sulfate surfactants of formulae:

CH₃(CH₂)ₓ(CHOSO₃⁻M⁺) CH₃ and

CH₃ (CH₂)ₓ(CHOSO₃⁻M⁺) CH₂CH₃

for the 2-sulfate and 3-sulfate, respectively. In these formulae x is at least 4, for example 6 to 20, preferably 10 to 16. M is cation, such as an alkali metal, for example lithium, sodium or potassium.

Examples of alkoxylated alkyl sulfates are ethoxylated alkyl sulfates of the formula:

RO(C₂H₄O)ₙSO₃⁻M⁺

wherein R is a C₈-C₂₀ alkyl group, preferably C₁₀-C₁₈ such as a C₁₂-C₁₆, n is at least 1, for example from 1 to 20, preferably 1 to 15, especially 1 to 6, and M is a salt-forming cation such as lithium, sodium, potassium, ammonium, alkylammonium or alkanolammonium. These compounds can provide especially desirable fabric cleaning performance benefits when used in combination with alkyl sulfates.

The alkyl sulfates and alkyl ether sulfates will generally be used in the form of mixtures comprising varying alkyl chain lengths and, if present, varying degrees of alkoxylation.

Other anionic surfactants which may be employed are salts of fatty acids, for example C₈-C₁₈ fatty acids, especially the sodium or potassium salts, and alkyl, for example C₈-C₁₈, benzene sulfonates.

Examples of nonionic surfactants are fatty acid alkoxylates, such as fatty acid ethoxylates, especially those of formula:

R(C₂H₄O)ₙOH

wherein R is a straight or branched C₈-C₁₆ alkyl group, preferably a C₉-C₁₅, for example C₁₀-C₁₄, alkyl group and n is at least 1, for example from 1 to 16, preferably 2 to 12, more preferably 3 to 10.

The alkoxylated fatty alcohol nonionic surfactant will frequently have a hydrophilic-lipophilic balance (HLB) which ranges from 3 to 17, more preferably from 6 to 15, most preferably from 10 to 15.

Examples of fatty alcohol ethoxylates are those made from C₁₂-C₁₅ alcohols which contain about 7 moles of ethylene oxide. Such materials are commercially marketed under the trademarks Neodol 25-7 and Neodol 23-6.5 by Shell Chemical Company. Other useful Neodols include Neodol 1-5, an ethoxylated fatty alcohol averaging 11 carbon atoms in its alkyl chain with about 5 moles of ethylene oxide; Neodol 23-9, an ethoxylated primary C₁₂-C₁₃ alcohol having about 9 moles of ethylene oxide; and Neodol 91-10, an ethoxylated C₉-C₁₁ primary alcohol having about 10 moles of ethylene oxide.

Alcohol ethoxylates of this type have also been marketed by Shell Chemical Company under the Dobanol trademark. Dobanol 91-5 is an ethoxylated C₉-C₁₁ fatty alcohol with an average of 5 moles ethylene oxide and Dobanol 25-7 is an ethoxylated C₁₂-C₁₅ fatty alcohol with an average of 7 moles of ethylene oxide per mole of fatty alcohol.

Other examples of suitable ethoxylated alcohol nonionic surfactants include Tergitol 15-S-7 and Tergitol 15-S-9, both of which are linear secondary alcohol ethoxylates available from Union Carbide Corporation. Tergitol 15-S-7 is a mixed ethoxylated product of a C₁₁-C₁₅ linear secondary alkanol with 7 moles of ethylene oxide and Tergitol 15-S-9 is the same but with 9 moles of ethylene oxide.

Other suitable alcohol ethoxylated nonionic surfactants are Neodol 45-11, which is an ethylene oxide condensation product of a fatty alcohol having 14-15 carbon atoms and the number of ethylene oxide groups per mole being about 11. Such products are available from Shell Chemical Company.

Further nonionic surfactants are, for example, C₁₀-C₁₈ alkyl polyglycosides, such as C₁₂-C₁₆ alkyl polyglycosides, especially the polyglucosides. These are especially useful when high foaming compositions are desired. Further surfactants are polyhydroxy fatty acid amides, such as C₁₀-C₁₈ N-(3-methoxypropyl) glycamides and ethylene oxide-propylene oxide block polymers of the Pluronic type.

Examples of cationic surfactants are those of the quaternary ammonium type.

The total content of surfactants in the composition is desirably 60 to 95wt%, especially 75 to 90wt%. Desirably an anionic surfactant is present in an amount of 50 to 75wt%, the nonionic surfactant is present in an amount of 5 to 50wt%, and/or the cationic surfactant is present in an amount of from 0 to 20wt%. The amounts are based on the total solids content of the composition, i.e. excluding any solvent which may be present.

The primary and secondary compositions, particularly when used as laundry washing or dishwashing compositions, may also independently comprise enzymes, such as protease, lipase, amylase, cellulase and peroxidase enzymes. Such enzymes are commercially available and sold, for example, under the registered trade marks Esperase, Alcalase and Savinase by Nova Industries A/S and Maxatase by International Biosynthetics, Inc. Desirably the enzymes are independently present in the primary or secondary compositions in an amount of from 0.5 to 3wt%, especially 1 to 2wt%, when added as commercial preparations they are not pure and this represents an equivalent amount of 0.005 to 0.5wt% of pure enzyme.

The secondary compositions may, if desired, independently comprise a thickening agent or gelling agent. Suitable thickeners are polyacrylate polymers such as those sold under the trade mark CARBOPOL, or the trade mark ACUSOL by Rohm and Haas Company. Other suitable thickeners are xanthan gums. The thickener, if present, is generally present in an amount of from 0.2 to 4wt%, especially 0.5 to 2wt%.

Primary or secondary compositions used in dishwashing independently usually comprise a detergency builder. The builders counteract the effects of calcium, or other ion, water hardness. Examples of such materials are citrate, succinate, malonate, carboxymethyl succinate, carboxylate, polycarboxylate and polyacetyl carboxylate salts, for example with alkali metal or alkaline earth metal cations, or the corresponding free acids. Specific examples are sodium, potassium and lithium salts of oxydisuccinic acid, mellitic acid, benzene polycarboxylic acids, C₁₀-C₂₂ fatty acids and citric acid. Other examples are organic phosphonate type sequestering agents such as those sold by Monsanto under the trade mark Dequest and alkylhydroxy phosphonates. Citrate salts and C₁₂-C₁₈ fatty acid soaps are preferred. Further builders are; phosphates such as sodium, potassium or ammonium salts of mono-, di- or tri-poly or oligo-phosphates; zeolites; silicates, amorphous or structured, such as sodium, potassium or ammonium salts.

Other suitable builders are polymers and copolymers known to have builder properties. For example, such materials include appropriate polyacrylic acid, polymaleic acid, and polyacrylic/polymaleic and copolymers and their salts, such as those sold by BASF under the trade mark Sokalan.

The builder is desirably present in an amount of up to 90 wt%, preferably 15 to 90 wt%, more preferable 15 to 75 wt%, relative to the total weight of the composition. Further details of suitable components are given in, for example, EP-A-694,059, EP-A-518,720 and WO 99/06522.

The primary and secondary compositions can also independently optionally comprise one or more additional ingredients. These include conventional detergent composition components such as further surfactants, bleaches, bleach enhancing agents, builders, suds boosters or suds suppressors, anti-tarnish and anti-corrosion agents, organic solvents, co-solvents, phase stabilisers, emulsifying agents, preservatives, soil suspending agents, soil release agents, germicides, pH adjusting agents or buffers, non-builder alkalinity sources, chelating agents, clays such as smectite clays, enzyme stabilizers, anti-limescale agents, colourants, dyes, hydrotropes, dye transfer inhibiting agents, brighteners, and perfumes. If used, such optional ingredients will generally constitute preferably no more than 15 wt%, for example from 1 to 6wt%, the total weight of the compositions.

Primary or secondary compositions which comprise an enzyme may optionally contain materials which stabilize the enzyme. Such enzyme stabilizers include, for example, polyols such as propylene glycol, boric acid and borax. Combinations of these enzyme stabilizers may also be employed. If utilized, the enzyme stabilizers generally constitute from 0.1 to 5wt%, ideally 0.1 to 1wt% of the compositions.

The primary and secondary compositions may independently optionally comprise materials which serve as phase stabilizers and/or co-solvents. Example are C₁-C₃ alcohols such as methanol, ethanol and propanol. C₁-C₃ alkanolamines such as mono-, di- and triethanolamines can also be used, by themselves or in combination with the alcohols. The phase stabilizers and/or co-solvents can, for example, constitute 0 to 1 wt%, preferably 0.1 to 0.5wt%, of the composition.

The primary and secondary compositions may independently optionally comprise components which adjust or maintain the pH of the compositions at optimum levels. The pH may be from, for example, 1 to 13, such as 8 to 11 depending on the nature of the composition. For example a dishwashing composition desirably has a pH of 8 to 11, a laundry composition desirable has a pH of 7 to 9, and a water-softening composition desirably has a pH of 7 to 9. Examples of pH adjusting agents are NaOH and citric acid.

The above examples may be used for dish or fabric washing. In particular dish washing formulations are preferred which are adapted to be used in automatic dish washing machines. Due to their specific requirements specialised formulation are required and these are illustrated below.

Amounts of the ingredients can vary within wide ranges, however preferred automatic dishwashing detergent compositions herein (which typically have a 1% aqueous solution pH of above 8, more preferably from 9.5 to 12, most preferably from 9.5 to 10.5) are those wherein there is present: from 5% to 90%, preferably from 5% to 75%, of builder; from 0.1% to 40%, preferably from 0.5% to 30%, of bleaching agent; from 0.1% to 15%, preferably from 0.2% to 10%, of the surfactant system; from 0.0001% to 1%, preferably from 0.001% to 0.05%, of a metal-containing bleach catalyst; and from 0.1% to 40%, preferably from 0.1% to 20% of a water-soluble silicate. Such fully-formulated embodiments typically further comprise from 0.1% to 15% of a polymeric dispersant, from 0.01% to 10% of a chelant, and from 0.00001% to 10% of a detersive enzyme, though further additional or adjunct ingredients may be present. Detergent compositions herein in granular form typically limit water content, for example to less than 7% free water, for better storage stability. Non-ionic surfactants useful in ADW (Automatic Dish Washing) compositions of the present invention desirably include surfactant(s) at levels of from 2% to 60% of the composition. In general, bleach-stable surfactants are preferred. Non-ionic surfactants generally are well known, being described in more detail in Kirk Othmer's Encyclopaedia of Chemical Technology, 3rd Ed., Vol. 22, pp. 360-379, "Surfactants and Detersive Systems", incorporated by reference herein.

Preferably the ADW composition comprises at least one non-ionic surfactant. One class of non-ionics are ethoxylated non-ionic surfactants prepared by the reaction of a monohydroxy alkanol or alkylphenol with 6 to 20 carbon atoms with preferably at least 12 moles particularly preferred at least 16 moles, and still more preferred at least 20 moles of ethylene oxide per mole of alcohol or alkylphenol.

Particularly preferred non-ionic surfactants are the non-ionic from a linear chain fatty alcohol with 16-20 carbon atoms and at least 12 moles particularly preferred at least 16 and still more preferred at least 20 moles of ethylene oxide per mole of alcohol.

According to one preferred embodiment the non-ionic surfactant additionally comprise propylene oxide units in the molecule. Preferably this PO units constitute up to 25% by weight, preferably up to 20% by weight and still more preferably up to 15% by weight of the overall molecular weight of the non-ionic surfactant. Particularly preferred surfactants are ethoxylated mono-hydroxy alkanols or alkylphenols, which additionally comprises polyoxyethylene-polyoxypropylene block copolymer units. The alcohol or alkylphenol portion of such surfactants constitutes more than 30%, preferably more than 50%, more preferably more than 70% by weight of the overall molecular weight of the non-ionic surfactant.

Another class of non-ionic surfactants includes reverse block copolymers of polyoxyethylene and polyoxypropylene and block copolymers of polyoxyethylene and polyoxypropylene initiated with trimethylolpropane.

Another preferred non-ionic surfactant can be described by the formula:

R¹O[CH₂CH(CH₃)O]_{X}[CH₂CH₂O]_{Y}[CH₂CH(OH)R²]

wherein R¹ represents a linear or branched chain aliphatic hydrocarbon group with 4-18 carbon atoms or mixtures thereof, R² represents a linear or branched chain aliphatic hydrocarbon rest with 2-26 carbon atoms or mixtures thereof, x is a value between 0.5 and 1.5 and y is a value of at least 15.

Another group of preferred nonionic surfactants are the end-capped polyoxyalkylated non-ionics of formula:

R¹O[CH₂CH(R³)O]_{X}[CH₂]ₖCH(OH)[CH₂]ⱼOR²

wherein R¹ and R² represent linear or branched chain, saturated or unsaturated, aliphatic or aromatic hydrocarbon groups with 1-30 carbon atoms, R³ represents a hydrogen atom or a methyl, ethyl, n-propyl, iso-propyl, n-butyl, 2-butyl or 2-methyl-2-butyl group , x is a value between 1 and 30 and, k and j are values between 1 and 12, preferably between 1 and 5. When the value of x is ≥2 each R³ in the formula above can be different. R¹ and R² are preferably linear or branched chain, saturated or unsaturated, aliphatic or aromatic hydrocarbon groups with 6-22 carbon atoms, where group with 8 to 18 carbon atoms are particularly preferred. For the group R³ H, methyl or ethyl are particularly preferred. Particularly preferred values for x are comprised between 1 and 20, preferably between 6 and 15.

As described above, in case x≥2, each R³ in the formula can be different. For instance, when x=3, the group R³ could be chosen to build ethylene oxide (R³=H) or propylene oxide (R³=methyl) units which can be used in every single order for instance (PO) (EO) (EO), (EO) (PO) (EO), (EO) (EO) (PO), (EO) (EO) (EO), (PO) (EO) (PO), (PO) (PO) (EO) and (PO) (PO) (PO). The value 3 for x is only an example and bigger values can be chosen whereby a higher number of variations of (EO) or (PO) units would arise.

Particularly preferred end-capped polyoxyalkylated alcohols of the above formula are those where k=1 and j=1 originating molecules of simplified formula:

R¹O[CH₂CH(R³)O]_{X}CH₂CH(OH)CH₂OR²

The use of mixtures of different non-ionic surfactants is particularly preferred in ADW formulations for example mixtures of alkoxylated alcohols and hydroxy group containing alkoxylated alcohols.

In the present invention, if more than one article, for example a container, is formed at the same time from the same sheet, the articles may then be separated from each other by cutting the portions between them, for example the sealing portions or flanges. Alternatively, they may be left conjoined and, for example, perforations provided between the individual articles so that they can be easily separated a later stage, for example by a consumer. If the articles are separated, the flanges may be left in place. However, desirably the flanges are partially removed in order to provide an even more attractive appearance. Generally the flanges remaining should be as small as possible for aesthetic purposes while bearing in mind that some flange is required if the articles are in the form of thermoformed containers to ensure the two films remain adhered to each other. A flange having a width of 1mm to 8mm is desirable, preferably 2mm to 7mm, most preferably about 5mm.

The articles, for example containers, may be packaged in outer containers if desired, for example non-water soluble containers which are removed before the water-soluble articles are used.

The containers produced by the process of the present invention, especially when used for a fabric care, surface care or dishwashing composition, may have a maximum dimension of 5cm, excluding any flanges. For example, a container may have a length of 1 to 5cm, especially 3.5 to 4.5cm, a width of 1.5 to 3.5 cm, especially 2 to 3cm, and a height of 1 to 2cm, especially 1.25 to 1.75cm.

The invention will now be illustrated further by reference to the following non-limiting Examples.

### Examples

### Packages Enclosed by a Water Dispersible Material

### Powder Formulation

The following formulation was prepared by mixing together the indicated components in the weight proportions indicated to prepare a dishwasher powder.

| | |
|---|---|
| Sodium Percarbonate (Degussa Q35) | 13.5% |
| Sodium Tripolyphosphate (Rhodia) | 5.5% |
| Anhydrous Citric acid | 3.0% |
| Trisodiumcitrate | 39.6% |
| Sodium bicarbonate | 27.4% |
| TAED | 5.8% |
| Polyacrylic acid | 0.5% |
| Amylase | 0.6% |
| Protease | 1.2% |
| Nonionic Surfactant | 0.5% |
| Dye | 0.15% |
| Benzotriazol | 0.2% |

### Secondary Component

1) A gelatin ball (solid or hollow) of diameter 11mm having about 0.5g of phthalimidoperhexanoic acid contained therein.
2) A solid ball (0.85g) comprising polyethylene glycol (54%), nonionic surfactant (44%), perfume and dye.
3) A compressed particulate ball with a mass of around 1 - 1.3g comprising; lactose (40%), cellulose (18%), sodium phosphonate (6%), protease (13%), amylase (15%), magnesium stearate (0.5%), water, perfume and dye.

### Process Method

The powder composition and a secondary component were filled into a container using the following procedure.

A Multivac thermoforming machine operating at 6 cycles/min and at ambient conditions of 25°C and 35% RH (±5% RH) was used to thermoform an anhydrous PVOH film. The PVOH film was prepared by a blown process from granules provided by PVAXX (RTM) ref C120 having a degree of hydrolysis of 88% and a thickness of 90 µm. When formed the PVOH has a negligible water content. The PVOH film was wrapped in a sealed polyethylene container which remained sealed until immediately prior to use. The PVOH film was thermoformed into a rectangular mould of 39mm length, 29mm width and 16mm depth, with the bottom edges being rounded to a radius of 10mm, at 90°C, 600mm Hg. Into the thus formed pocket was added one of the secondary components using a robot arm, afterwards 21g of the powder composition was added. An identical film was placed on top and heat sealed at 100°C in a water sealing process. The thus produced containers were separated from each other by cutting the flanges. Each container was rounded and had a full appearance. After a few hours they attained an attractive, rounded appearance.

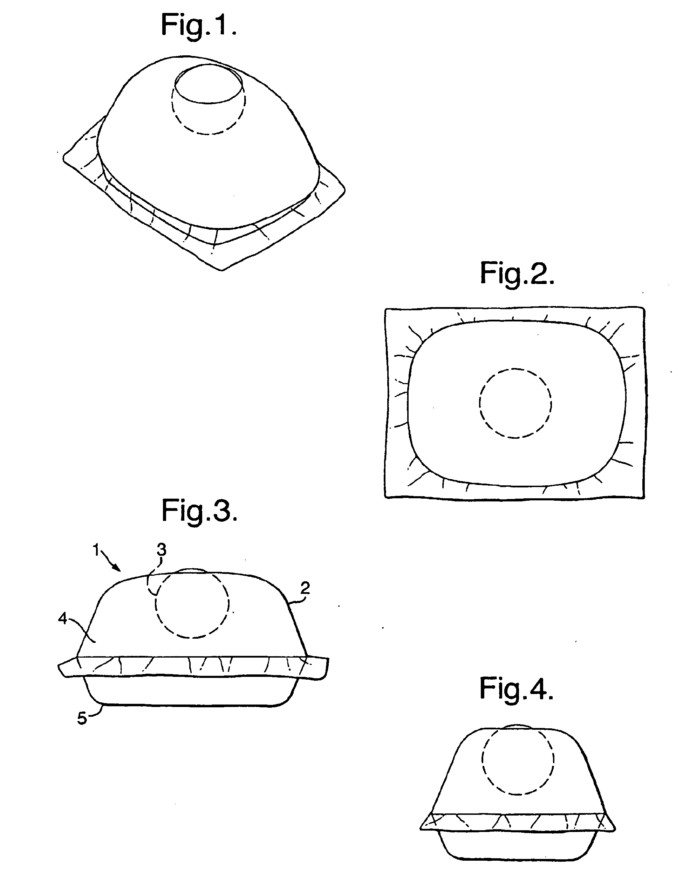

The invention will now be further illustrated with reference to Figures 1 to 4.

Figures 1 (perspective view), 2 (underneath view) 3 and 4 (both cross-sections) show a water soluble article 1 of the present invention.

The article 1 comprises a primary component 2, in the form of a pocket, and made of water soluble material. The first component 2 contains a secondary component 3, which is optionally attached, for example glued, at a point or area on the inside of the primary component 2.

The secondary component as illustrated is in the form of a sphere.

The primary component 2 additionally contains a powdered/granulated detergent formulation 4, which is tightly packed therein to hinder movement of the secondary component with the article 1.

The article further comprises a film 5 of water soluble material which is bonded to the primary component 2 to form the sealed article 1.

It is obvious for someone skilled in the art that there are more and other embodiments of the article of the present application achieving the basic feature of the invention.

The features disclosed in the foregoing description, in the claims and/or drawings may, both separately and in any combination thereof be material for realising the invention in diverse forms thereof.

## Claims

1. A process for preparing a water-soluble article (1) comprising a water-soluble primary thermoformed component (2, 4) and a water-soluble secondary component (3) arranged inside the primary component, which comprises:-
(a) forming the primary component (2, 4) into a pocket, by thermoforming in the cavity of a thermoforming mould that also has a recess to receive the secondary component (3);
(b) introducing the secondary component (3) into the inside of the pocket such that it is received in said recess;
(c) introducing the contents of the primary component into the pocket; and
(d) sealing the primary component (2, 4);
wherein the contents of the primary component (2, 4) are granulated and/or particulate solid(s), and the packing of said contents into the primary component (2, 4) is tight to ensure that the secondary component (3) is fixed in position in the recess of the primary component (2, 4).

2. A process according to claim 1 wherein the primary component (2, 4) is a film.

3. A process according to claim 1 wherein the primary thermoformed component (2, 4) comprises a film.

4. A process according to claim 2 or 3 wherein the primary component (2, 4) is sealed by placing a film on top of the filled pocket and across a sealing portion and sealing the films together at the sealing portion.

5. A process according to any one of the preceding claims wherein the secondary component (3) is a compressed solid or a container containing a secondary composition.

6. A process according to any one of the preceding claims wherein the secondary component (3) is a container comprising a polymeric film containing a solid, a gel or a liquid.

7. A process according to any one of the preceding claims wherein the secondary component (3) is in the form of a ball, and adding the secondary component (3) to the mould comprises allowing the ball to roll into the recess.

8. A process according to claim 7 wherein the recess is at the centre of the bottom surface of the mould.

9. A process according to any one of the preceding claims wherein the primary component (2, 4) and/or the secondary component (3) comprises a poly(vinyl alcohol).

10. A process according to any one of the preceding claims wherein the article (1) is for use in dishwashing, fabric care or surface care.

11. A process according to claim 10 wherein the primary component (2, 4) comprises a dishwashing, water-softening, laundry or detergent composition.

12. A process according to claim 10 or 11 wherein the secondary component (3) comprises a dishwashing, water-softening, laundry or detergent composition or a rinse-aid.

13. A process according to any one of claims 1 to 9 wherein the primary component (2, 4) and/or secondary component (3) comprises a disinfectant, antibacterial or antiseptic composition.

14. A process according to any one of claims 1 to 9 or 13 wherein the article (1) comprises a refill composition for a trigger-type spray.

15. A process according to any one of claims 1 to 9 wherein the article (1) comprises an agricultural composition.

16. A water-soluble article (1) comprising a water-soluble primary component (2, 4) which is a thermoformed container containing a granulate and/or particulate solid primary composition, and a water-soluble secondary component (3) arranged on the inside of the thermoformed container in a recess thereof, the fixing of the secondary component (3) in position in the primary component (2, 4) being ensured by the tight packing of said solid primary composition into said primary component (2, 4).

17. An article (1) according to claim 16 wherein the secondary component (3) is a compressed solid or a container containing a secondary composition.

18. An article (1) according to claim 17 wherein the secondary component (3) is a container comprising a polymeric film containing a solid, a gel or a liquid.

19. An article (1) according to any one of claims 16 to 18 wherein the secondary component (3) is in the form of a ball.

20. An article (1) according to any one of claims 16 to 19 wherein the primary component (2, 4) and/or the secondary component (3) comprises a poly(vinyl alcohol).

21. An article (1) according to any one of claims 16 to 20 wherein the article (1) is for use in dishwashing, fabric care or surface care.

22. An article (1) according to claim 21 wherein the primary composition is a dishwashing, water-softening, laundry or detergent composition.

23. An article (1) according to claim 21 or 22 wherein the secondary component (3) comprises a dishwashing, water-softening, laundry or detergent composition or a rinse-aid.

24. An article (1) according to any one of claims 16 to 20 wherein the primary composition and/or secondary component (3) comprises a disinfectant, antibacterial or antiseptic composition.

25. An article (1) according to any one of claims 16 to 20 or 24 wherein the article (1) comprises a refill composition for a trigger-type spray.

26. An article (1) according to any one of claims 16 to 20 wherein the article (1) comprises an agricultural composition.

## Patentansprüche

1. Verfahren zum Herstellen eines wasserlöslichen Gegenstands (1), umfassend eine wasserlösliche warmgeformte primäre Komponente (2, 4) und eine wasserlösliche sekundäre Komponente (3), die im Inneren der primären Komponente angeordnet ist, umfassend:
(a) Formen der primären Komponente (2, 4) zu einer Tasche durch Warmformen im Hohlraum eines Warmformwerkzeugs, das auch eine Einbuchtung zum Aufnehmen der sekundären Komponente (3) aufweist;
(b) Einführen der sekundären Komponente (3) in das Innere der Tasche, so dass sie in die Ausbuchtung aufgenommen wird;
(c) Einführen des Inhalts der primären Komponente in die Tasche; und
(d) Verschließen der primären Komponente (2, 4);
wobei der Inhalt der primären Komponente (2, 4) granulierte und/oder partikuläre Feststoffe sind und das Packen des Inhalts in die primäre Komponente (2, 4) dicht ist, um zu gewährleisten, dass die sekundäre Komponente (3) in der Ausbuchtung der primären Komponente (2, 4) in Position fixiert ist.

2. Verfahren gemäß Anspruch 1, wobei die primäre Komponente (2, 4) ein Film ist.

3. Verfahren gemäß Anspruch 1, wobei die warmgeformte primäre Komponente (2, 4) einen Film umfasst.

4. Verfahren gemäß Anspruch 2 oder 3, wobei die primäre Komponente (2, 4) verschlossen wird, indem ein Film auf der gefüllten Tasche und über einen Versiegelungsabschnitt angeordnet wird und die beiden Filme an dem Versiegelungsabschnitt miteinander versiegelt werden.

5. Verfahren gemäß einem der vorstehenden Ansprüche, wobei die sekundäre Komponente (3) ein komprimierter Feststoff oder ein Behälter, der eine sekundäre Zusammensetzung enthält, ist.

6. Verfahren gemäß einem der vorstehenden Ansprüche, wobei die sekundäre Komponente (3) ein Behälter ist, umfassend einen Polymerfilm, der einen Feststoff, ein Gel oder eine Flüssigkeit enthält.

7. Verfahren gemäß einem der vorstehenden Ansprüche, wobei die sekundäre Komponente (3) in der Form einer Kugel vorliegt und das Zugeben der sekundären Komponente (3) zu dem Formkörper umfasst, die Kugel in die Ausbuchtung rollen zu lassen.

8. Verfahren gemäß Anspruch 7, wobei sich die Ausbuchtung in der Mitte der unteren Oberfläche des Formkörpers befindet.

9. Verfahren gemäß einem der vorstehenden Ansprüche, wobei die primäre Komponente (2, 4) und/oder die sekundäre Komponente (3) einen Poly(vinylalkohol) umfassen.

10. Verfahren gemäß einem der vorstehenden Ansprüche, wobei der Gegenstand (1) für die Verwendung beim Geschirrspülen, der Gewebepflege oder der Oberflächenpflege ist.

11. Verfahren gemäß Anspruch 10, wobei die primäre Komponente (2, 4) eine Geschirrspül-, Wasserenthärtungs-, Wasch- oder Detergenszusammensetzung umfasst.

12. Verfahren gemäß Anspruch 10 oder 11, wobei die sekundäre Komponente (3) eine Geschirrspül-, Wasserenthärtungs-, Wasch- oder Detergenszusammensetzung oder eine Spülhilfe umfasst.

13. Verfahren gemäß einem der Ansprüche 1 bis 9, wobei die primäre Komponente (2, 4) und/oder die sekundäre Komponente (3) eine desinfizierende, antibakterielle oder antiseptische Zusammensetzung umfassen.

14. Verfahren gemäß einem der Ansprüche 1 bis 9 oder 13, wobei der Gegenstand (1) eine Nachfüllzusammensetzung für ein Spray vom Auslösertyp umfasst.

15. Verfahren gemäß einem der Ansprüche 1 bis 9, wobei der Gegenstand (1) eine landwirtschaftliche Zusammensetzung umfasst.

16. Wasserlöslicher Gegenstand (1), umfassend eine wasserlösliche primäre Komponente (2, 4), die ein warmgeformter Behälter ist, der eine granulatförmige und/oder partikuläre feste primäre Zusammensetzung und eine wasserlösliche sekundäre Komponente (3), die im Inneren des warmgeformten Behälters in einer Ausbuchtung davon angeordnet ist, umfasst, wobei das Fixieren der sekundären Komponente (3) in Position innerhalb der primären Komponente (2, 4) durch die dichte Packung der festen primären Zusammensetzung in die primäre Komponente (2, 4) gewährleistet wird.

17. Gegenstand (1) gemäß Anspruch 16, wobei die sekundäre Komponente (3) ein komprimierter Feststoff oder ein Behälter, der eine sekundäre Zusammensetzung enthält, ist.

18. Gegenstand (1) gemäß Anspruch 17, wobei die sekundäre Komponente (3) ein Behälter ist, umfassend einen Polymerfilm, der einen Feststoff, ein Gel oder eine Flüssigkeit enthält.

19. Gegenstand (1) gemäß einem der Ansprüche 16 bis 18, wobei die sekundäre Komponente (3) in der Form einer Kugel vorliegt.

20. Gegenstand (1) gemäß einem der Ansprüche 16 bis 19, wobei die primäre Komponente (2, 4) und/oder die sekundäre Komponente (3) einen Poly(vinylalkohol) umfassen.

21. Gegenstand (1) gemäß einem der Ansprüche 16 bis 20, wobei der Gegenstand (1) für die Verwendung beim Geschirrspülen, der Gewebepflege oder der Oberflächenpflege ist.

22. Gegenstand (1) gemäß Anspruch 21, wobei die primäre Zusammensetzung eine Geschirrspül-, Wasserenthärtungs-, Wasch- oder Detergenszusammensetzung ist.

23. Gegenstand (1) gemäß Anspruch 21 oder 22, wobei die sekundäre Komponente (3) eine Geschirrspül-, Wasserenthärtungs-, Wasch- oder Detergenszusammensetzung oder eine Spülhilfe umfasst.

24. Gegenstand (1) gemäß einem der Ansprüche 16 bis 20, wobei die primäre Zusammensetzung und/oder die sekundäre Komponente (3) eine desinfizierende, antibakterielle oder antiseptische Zusammensetzung umfassen.

25. Gegenstand (1) gemäß einem der Ansprüche 16 bis 20 oder 24, wobei der Gegenstand (1) eine Nachfüllzusammensetzung für ein Spray vom Auslösertyp umfasst.

26. Gegenstand (1) gemäß einem der Ansprüche 16 bis 20, wobei der Gegenstand (1) eine landwirtschaftliche Zusammensetzung umfasst.

## Revendications

1. Procédé de préparation d'un article hydrosoluble (1) comprenant un composant principal thermoformé hydrosoluble (2, 4) et un composant secondaire hydrosoluble (3) disposé à l'intérieur du composant principal, qui comprend :
(a) le formage du composant principal (2, 4) en une poche, par thermoformage dans la cavité d'un moule de thermoformage qui comporte également un évidement pour recevoir le composant secondaire (3) ;
(b) l'introduction du composant secondaire (3) à l'intérieur de la poche de telle sorte qu'il soit reçu dans ledit évidement ;
(c) l'introduction du contenu du composant principal dans la poche ; et
(d) le scellement du composant principal (2, 4) ;
dans lequel le contenu du composant principal (2, 4) est un/des solide(s) granulé(s) et/ou particulaire(s), et le tassement dudit contenu dans le composant principal (2, 4) est serré pour s'assurer que le composant secondaire (3) est fixé en position dans l'évidement du composant principal (2, 4).

2. Procédé selon la revendication 1 dans lequel le composant principal (2, 4) est un film.

3. Procédé selon la revendication 1 dans lequel le composant principal thermoformé (2, 4) comprend un film.

4. Procédé selon la revendication 2 ou 3 dans lequel le composant principal (2, 4) est scellé en plaçant un film au-dessus de la poche remplie et en travers d'une partie de scellement et en scellant les films ensemble au niveau de la partie de scellement.

5. Procédé selon l'une quelconque des revendications précédentes dans lequel le composant secondaire (3) est un solide comprimé ou un récipient contenant une composition secondaire.

6. Procédé selon l'une quelconque des revendications précédentes dans lequel le composant secondaire (3) est un récipient comprenant un film polymère contenant un solide, un gel ou un liquide.

7. Procédé selon l'une quelconque des revendications précédentes dans lequel le composant secondaire (3) se présente sous la forme d'une bille, et l'addition du composant secondaire (3) au moule comprend l'opération consistant à laisser la bille rouler dans l'évidement.

8. Procédé selon la revendication 7 dans lequel l'évidement se situe au centre de la surface inférieure du moule.

9. Procédé selon l'une quelconque des revendications précédentes dans lequel le composant principal (2, 4) et/ou le composant secondaire (3) comprennent un alcool polyvinylique.

10. Procédé selon l'une quelconque des revendications précédentes dans lequel l'article (1) est destiné à une utilisation dans le lavage de la vaisselle, l'entretien des tissus ou l'entretien des surfaces.

11. Procédé selon la revendication 10 dans lequel le composant principal (2, 4) comprend une composition de lavage de la vaisselle, d'adoucissement de l'eau, de lessive ou détergente.

12. Procédé selon la revendication 10 ou 11 dans lequel le composant secondaire (3) comprend une composition de lavage de la vaisselle, d'adoucissement de l'eau, de lessive ou détergente ou un adjuvant de rinçage.

13. Procédé selon l'une quelconque des revendications 1 à 9 dans lequel le composant principal (2, 4) et/ou le composant secondaire (3) comprennent une composition désinfectante, antibactérienne ou antiseptique.

14. Procédé selon l'une quelconque des revendications 1 à 9 et 13 dans lequel l'article (1) comprend une composition de recharge pour un pulvérisateur du type à gâchette.

15. Procédé selon l'une quelconque des revendications 1 à 9 dans lequel l'article (1) comprend une composition agricole.

16. Article hydrosoluble (1) comprenant un composant principal hydrosoluble (2, 4) qui est un récipient thermoformé contenant une composition principale solide granulée et/ou particulaire, et un composant secondaire hydrosoluble (3) disposé à l'intérieur du récipient thermoformé dans un évidement de celui-ci, la fixation du composant secondaire (3) en position dans le composant principal (2, 4) étant assurée par le tassement serré de ladite composition principale solide dans ledit composant principal (2, 4).

17. Article (1) selon la revendication 16 dans lequel le composant secondaire (3) est un solide comprimé ou un récipient contenant une composition secondaire.

18. Article (1) selon la revendication 17 dans lequel le composant secondaire (3) est un récipient comprenant un film polymère contenant un solide, un gel ou un liquide.

19. Article (1) selon l'une quelconque des revendications 16 à 18 dans lequel le composant secondaire (3) se présente sous la forme d'une bille.

20. Article (1) selon l'une quelconque des revendications 16 à 19 dans lequel le composant principal (2, 4) et/ou le composant secondaire (3) comprennent un alcool polyvinylique.

21. Article (1) selon l'une quelconque des revendications 16 à 20, l'article (1) étant destiné à une utilisation dans le lavage de la vaisselle, l'entretien des tissus ou l'entretien des surfaces.

22. Article (1) selon la revendication 21 dans lequel la composition principale est une composition de lavage de la vaisselle, d'adoucissement de l'eau, de lessive ou détergente.

23. Article (1) selon la revendication 21 ou 22 dans lequel le composant secondaire (3) comprend une composition de lavage de la vaisselle, d'adoucissement de l'eau, de lessive ou détergente ou un adjuvant de rinçage.

24. Article (1) selon l'une quelconque des revendications 16 à 20 dans lequel la composition principale et/ou le composant secondaire (3) comprennent une composition désinfectante, antibactérienne ou antiseptique.

25. Article (1) selon l'une quelconque des revendications 16 à 20 et 24, l'article (1) comprenant une composition de recharge pour un pulvérisateur du type à gâchette.

26. Article (1) selon l'une quelconque des revendications 16 à 20, l'article (1) comprenant une composition agricole.
